# EUROPEAN PATENT SPECIFICATION

(11) **EP 3 766 388 B1**
(45) Date of publication and mention of the grant of the patent: **27.09.2023**
(21) Application number: 20186532.6
(22) Date of filing: 17.07.2020
(51) Int. Cl.: A47G 19/12, A47J 41/00, F25D 31/00, F28D 1/02, F25D 3/08

(54) **STERILE APPARATUS FOR RAPID COOLING OF HOT WATER**
STERILE VORRICHTUNG ZUM SCHNELLEN ABKÜHLEN VON HEISSEM WASSER
DISPOSITIF STÉRILE POUR REFROIDISSEMENT RAPIDE D'EAU CHAUDE

(30) Priority: 17.07.2019 US 201916513724
(43) Date of publication of application: 20.01.2021
(73) Proprietor: Rosenblum, Reut, Petah Tikva (IL); Van Dijk, Yedidya Yochai, Yakir (IL); Rosenbloom, Mely, Bnei Brak (IL)
(72) Inventor: Rosenblum, Reut, Petah Tikva (IL); Van Dijk, Yedidya Yochai, Yakir (IL); Rozenblum, Eli, deceased (IL)
(74) Representative: Kretschmann, Dennis

(56) References cited:
- WO-A1-2019/092320
- JP-A- 2017 172 839
- US-A1- 2006 283 203
- US-A1- 2019 154 339

## Description

### TECHNICAL FIELD

The present invention refers to a sterile apparatus for the rapid cooling of hot water.

### BACKGROUND ART

It is often necessary to boil liquids before using them in order to prevent contamination, and then cool them down to a temperature that is suitable for drinking. For example, when preparing milk substitutes for babies, the water must first be boiled in order to prevent contamination, and then cooled down to a temperature that is suitable for feeding the baby. It is of course desirable that the procedure of cooling the water to the desired temperature be sterile. In general, it is commonly accepted that the parent pours the boiling water into the feeding bottle, and waits a relatively long time for the contents to cool. Sometimes the parent places the feeding bottle with the boiled water in a vessel that is filled with tap water, in order to hasten the cooling, although this still requires a long period of time to cool the contents. The present invention offers a good and effective solution to the aforementioned problem, and for a variety of other cases in which there is a need for the rapid, sterile cooling of very hot liquids.

U.S. patent application 2012/0312521 ("Application 521") discloses a beverage cooling device comprising relatively many parts including several cooling portions, which assembled one into the other. The structure of the device of Application 521 is cumbersome, expensive for manufacturing and not easy for cleaning, relatively to the apparatus subject matter of the present invention.

U.S. patent application US 2019/0154339 A1 discloses a sterile apparatus for rapid cooling of hot water in which cooling flasks are held in recesses formed in a sidewall of a tank.

An apparatus for producing a stream of cold air that can be carried in a person's clothes is described in JP 2017-172839 A. A fan blows an airstream through a recess formed between two adjacent cooling storage containers having projecting portions.

A thermally insulated transport box for temperature-sensitive goods such as drugs and foodstuffs is disclosed in WO 2019/092320 A1.

US 2006/0283203 A1 discloses a container in which a plurality of cooling plates are arranged in parallel. Spacers separate the cooling plates from one another and from the side walls of the container.

### DESCRIPTION OF THE DRAWINGS

The intention of the drawing attached to the application is not to limit the scope of the invention and its application. The drawing is intended only to illustrate the invention and it constitutes only one of its many possible implementations.
FIG. 1 depicts the cooling apparatus (1) in its closed state, ready for use.
FIG. 2 presents an exploded view of the apparatus (1), showing the tank (2) the cooling flasks (3) the stoppers manifold (4), and the pouring receptacle (5), according to an example which is not part of the invention,
FIG. 3 presents a sectioned side view of the apparatus (1), showing the gaps (6), according to an example which is not part of the invention,
FIG. 4 depicts the way in which the pouring receptacle (5) is mounted on the stoppers manifold (4) that closes the cooling flasks (3), according to an example which is not part of the invention,
FIG. 5 presents a sectioned top view of the cooling flasks (3), and the way in which they fit into the tank (2), according to an example which is not part of the invention,
FIG. 6 is a sectioned side view of the tank (2) into which the flasks are inserted (3) and closed by the stoppers manifold (4), and of the way in which the pouring receptacle (5) closes the tank (2), according to an example which is not part of the invention,
FIG. 7 is a schematic illustration of the gap (7) between two cooling flasks (3).
FIGS 8-10 depict the cooling flask (3) with protrusions (38) on its bottom (39), on its lateral walls (33) and on its longitudinal walls (32) according to the invention,
FIG. 11 depicts several cooling flasks (3) with protrusions (38), according to the invention,
Figure 12 is a schematic cross sectional view of the tank (2) with protrusions (38) on its bottom (29), on its lateral walls (23) and on its longitudinal walls (24), according to an example which is not part of the invention.

### THE INVENTION

The invention is defined by claim 1.

The main objective of the present invention is to provide an apparatus (1) that enables to cool hot fluids within a relatively very short time. Another objective of the present invention is to provide an apparatus as mentioned that enables to cool liquids as mentioned while maintaining the sterility of the cooled liquids. For the sake of fluency of the text, the term "water" will refer to water as well as to a variety of other liquids, and the expression "boiled water" will also refer to hot water.

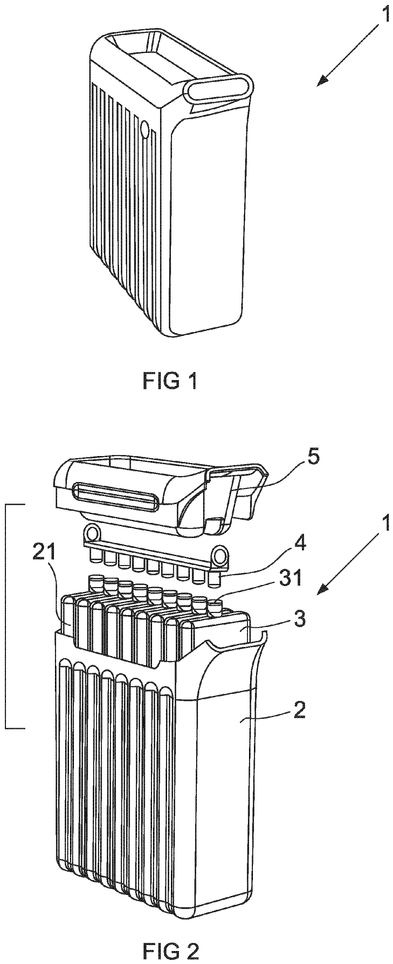

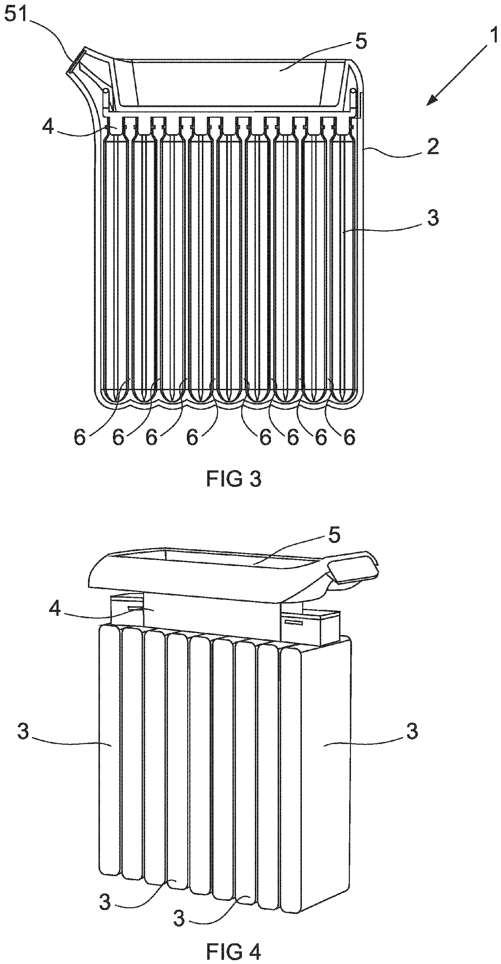

The apparatus for cooling hot water (1) consists of an external tank (2) and several internal cooling flasks (3). In addition, the apparatus (1) may include stoppers or a stoppers manifold (4) and a pouring receptacle (5). Figure 1 depicts the apparatus (1) in its assembled state. Figures 2-7 relate to examples which are not part of the invention. Figure 2 presents an exploded view of the apparatus (1) and the way in which its components are integrated. Figure 3 presents a sectioned side view of the apparatus (1).

The tank (2) is closed on the bottom and on its circumferential sides, and has a top opening (21). The cooling flasks (3) are relatively narrow containers with a top opening (31). The apparatus (1) comprises several cooling flasks (3), at least three, positioned very close to one another within the external tank (2), as depicted, for instance, in Figures 2 and 3. The cooling flasks (3) should contain coolant, which can be either regular tap water or any other coolant.

The top openings (31) of the flasks (3) may be permanently closed after being filled with coolant. Alternatively, the openings (31) may be closed with stoppers (4) in a way that enables the user to fill and empty the coolant contents. Stoppers (4) may be individual such that each stopper closes one opening (31) or they can comprise a stoppers manifold (4) that closes all of the openings (31) at once, as depicted for example in the drawings. As mentioned, the apparatus (1) may be equipped with a pouring receptacle (5) that can be designed as a kind of basin with a bottom opening (51). The pouring receptacle may also serve as a top cover for the tank (2). In principle, the apparatus (1) does not have to be equipped with a pouring receptacle.

The gaps (7) between one cooling flask (3) and another constitute a fundamental element of the invention, subject of the present patent application. The cooling flasks (3) are set within the tank (2) in such a way that a very narrow gap (7) is left between each cooling flask (3) and the next cooling flask (3) adjacent to it. Thus, almost the entire volume of the tank (2) is occupied by the volume of the internal cooling flasks (3). Figures 2-5 illustrate the way in which the cooling flasks (3) can be positioned within the tank (2), according to an example which is not part of the invention.

The gap (7) between each two adjacent cooling flasks (3) is smaller than 2.5 millimeters, although the invention covers both larger and smaller dimensions as well.

The cooling space (6): Setting the cooling flasks (3) in the external tank (2) according to the aforementioned structure leaves very narrow spaces between the flasks (3). These narrow spaces constitute the cooling space (6). A variety of fixing means may be used (22) (33) to fix the cooling flasks (3) inside the external tank (2) so that very narrow gaps (7) exist between them, thus forming the cooling space (6).

The fixing means may be, according to an example which is not part of the invention, as depicted in the drawings, whereby the inner wall of the tank (2) has recesses (22) that match the lateral rounded side (33) of the flasks (3). The spaces between the flasks (3) create a single space that constitutes the cooling space (6), which may either be closed and have a top opening, or be completely open on top.

The internal cooling space (6) constitutes a space for quick and effective cooling, since its surface area is relatively very large. The structure of the cooling space (6) enables the coolant fluid in the cooling flasks (3) to quickly adsorb the heat. Thus, a relatively small volume of boiled water is poured into the cooling space, filling the very narrow gaps between the cooling flasks. The large contact area between the boiled water and the walls of the cooling flasks (3) leads to rapid cooling of the boiled water. After boiled water is poured into the apparatus (1), its temperature plummets to the desired temperature within a very short period of time.

Using the apparatus (1): If the apparatus (1) is equipped with stoppers (4) that enable the user to fill it with coolant such as tap water, and a pouring receptacle (5), as described above, then the apparatus (1) is used in the following way: the cooling flasks (3) are filled with tap water or another coolant, and are then closed with the stoppers (4). The tank (2) is then covered with the pouring receptacle (5). The boiled water is poured into the pouring receptacle (5) and flows into the internal cooling space (6). After a very short period of time, the water in the cooling space (6) may be poured out, simply by tilting the apparatus (1). The water that is cooled in the apparatus (1) is stationary during the cooling process and does not have to be circulated.

The structure of the apparatus components enables quick access to all component parts for quick and easy cleaning and disinfection, a very important aspect in the preparation of baby food. The apparatus components can be made from a wide variety of materials, even materials that are not especially good conductors of heat. For example, components may be manufactured from polypropylene, which meets strict standards with regard to food and beverage containers. The apparatus may come in a variety of sizes. For example, an apparatus designed for cooling boiled water used in the preparation of milk substitutes for babies may include an internal cooling space (6) with a volume in the order of 200 ml.

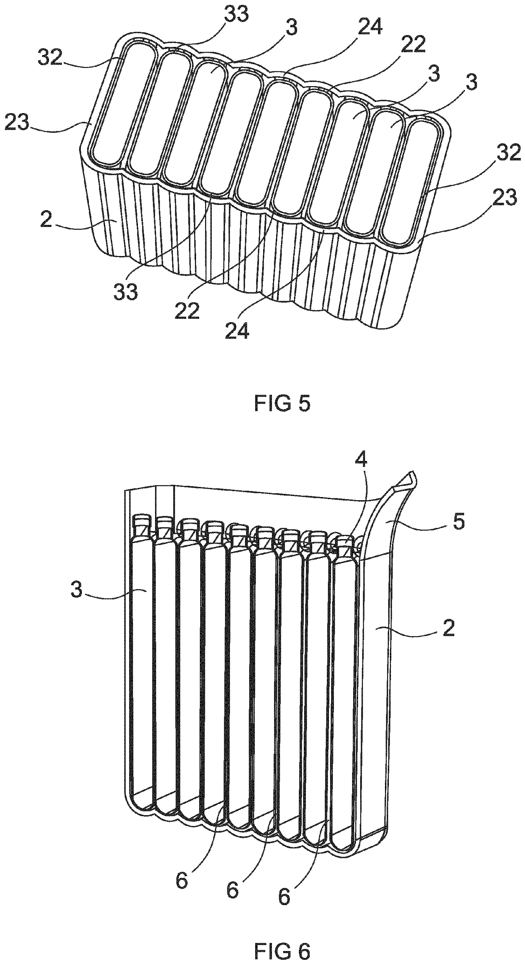

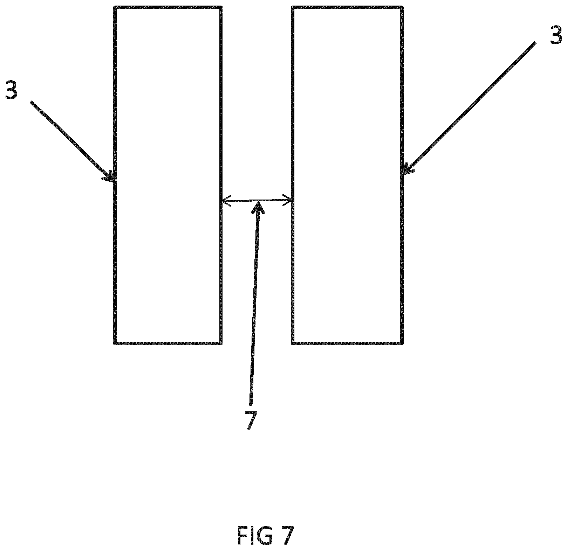

Figure 1 depicts the cooling apparatus (1) in its closed state, ready for use. Figures 2-7 relate to an example which is not part of the invention. Figure 2 presents an exploded view of the apparatus (1) that shows the tank (2), the flasks (3), the stoppers manifold (4) and the pouring receptacle (5), and the way in which they are integrated. Figure 3 presents a sectioned side view of the apparatus (1) showing the cooling space (6). Figure 4 depicts the way in which the pouring receptacle (5) is mounted on the stoppers manifold (4) that closes the cooling flasks (3). Figure 5 presents a sectioned top view of the cooling flasks (3), and the way in which they fit into the tank (2). Figure 6 is a sectioned side view of the tank (2) into which the flasks are inserted (3) and closed by the stoppers manifold (4), and of the way in which the pouring receptacle (5) closes the external tank (2). Figure 7 is a schematic illustration of the gap (7) between two cooling flasks (3).

As it is understood from the above explanations and the drawings the apparatus (1) for cooling liquids comprises a tank (2) and cooling flasks (3). The tank (2) has two longitudinal walls (24), two lateral walls (23) and a top opening (21). Each cooling flasks has two longitudinal walls (32) and two lateral walls (33) and these cooling flasks are designed to contain coolant material.

According to an example which is not part of the invention, longitudinal wall (24) of the tank (2) has recesses (22) that match the shape of the lateral walls (33) of the cooling flasks (3). Each cooling flasks is designed to be fixed inside the tank by attaching the lateral walls of each cooling flasks to the recesses.

The cooling flasks are designed to be set within the tank in such a way that a gap (7) smaller than 2.5 millimeters is formed between each two adjacent cooling flasks, creating a cooling space (6). The total volume of the cooling flasks is three times greater or more than the total volume of the cooling space (6). For example, the best way is to have a proportion of 200 cc of cooling space and 800 cc total volumes of the cooling flasks. This structure enables the user to cool 200 cc of boiled water in a short time by using 800 cc of tap water (inside the cooling flasks). This structure enables the user to pour hot water into the cooling space (6) and the coolant material within the cooling flasks will adsorb heat from the hot water.

The apparatus (1) according to the present invention is in general similar to the previous example which is described above with the following differences: the tank does not include recesses and the shape of the lateral walls (33) of the cooling flasks (3) is irrelevant. The gaps (7) between each two adjacent cooling flasks (7) are created by protrusions (38) on the longitudinal walls (32), the lateral walls (33) and bottoms (39) of the cooling flasks (3). The height of these protrusions (38) is smaller than 2.5 millimeters.

The apparatus (1) for cooling liquids includes a tank (2) and cooling flasks (3). The tank (2) has two longitudinal walls (24), two lateral walls (23), a bottom (29) and a top opening (21). Each of said cooling flasks (3) has two longitudinal walls (32), two lateral walls (33) and a bottom (39). The cooling flasks (3) are designed to contain the coolant material, for example cold tap water.

The lateral walls (33), the bottom (39) and at least one longitudinal wall (32) of each of said cooling flasks (3) has at least one protrusion (38) smaller than 2.5 millimeters. The cooling flasks (3) are designed to be set inside the tank (2) in such a way that said protrusions (38) are attached to the longitudinal walls (24) and to the bottom (29) of the tank (2), any may also attached to the lateral walls (23) of the tank (2).

The protrusions (38) create gaps (7) smaller than 2.5 millimeters between each two adjacent cooling flasks (3), between the bottoms of said cooling flasks (3) to the bottom (29) of said tank (2), and between the lateral walls (33) of said cooling flasks (3) to the longitudinal walls (24) of said tank (2). These gaps (7) constitute a single cooling space (6). The total volume of the cooling flasks (3) is three times greater or more than the total volume of the single cooling space (6). When a user pours hot water into the single cooling space then the coolant material within said cooling flasks adsorbs heat from said hot water.

According to an example which is not part of the invention, the apparatus (1) includes the tank (2) and the cooling flasks (3). Each of said bottom (29) and said longitudinal walls (24) of said tank (2), and at least one longitudinal wall (32) of each cooling flasks (3), has at least one protrusion (38) smaller than 2.5 millimeters. The cooling flasks (3) are designed to be set within the tank (2) in such a way that said protrusions (38) are attached to the lateral walls (33) and the bottoms (39) of said cooling flasks (3). Wherein said protrusions (38) create the gap (7) that is smaller than 2.5 millimeters between each two adjacent cooling flasks (3), between the bottoms (39) of said cooling flasks (3) to the bottom (29) of said tank (2), and between the lateral walls (33) of said cooling flasks (3) to the longitudinal walls (24) of said tank (2), wherein said gaps (7) constitute the single cooling space (6).

According to an example which is not part of the invention, the apparatus (1) includes the tank and the cooling flasks. At least one longitudinal wall of each of said cooling flasks has at least one protrusion smaller than 2.5 millimeters. The cooling flasks are designed to be set within the tank in such a way that said protrusions create a gap smaller than 2.5 millimeters between each two adjacent cooling flasks, wherein said gaps constitute the single cooling space.

According to an example which is not part of the invention, the apparatus for cooling liquids includes the tank and the cooling flasks. The tank has two longitudinal walls, two lateral walls and a top opening. Each of said cooling flasks has two longitudinal walls and two lateral walls. The cooling flasks are designed to contain the coolant material.

Each of said longitudinal walls of said tank has recesses wherein each of said recesses match a shape of said lateral walls of said cooling flasks. Each of said cooling flasks is designed to be fixed inside the tank by attaching the lateral walls of each cooling flasks to corresponding recesses from said recesses. The cooling flasks are designed to be set within the tank in such a way that the gap which is smaller than 2.5 millimeters is formed between each two adjacent cooling flasks, creating the cooling space. Wherein the total volume of the cooling flasks is three times greater or more than the total volume of the cooling space. Whereby when a user pours hot water into the single cooling space then the coolant material within said cooling flasks adsorbs heat from said hot water.

According to the present invention, the lateral walls (33), the bottom (39) and at least one longitudinal wall (32), of each of said cooling flasks (3), has at least one protrusion (38) smaller than 2.5 millimeters. The cooling flasks (3) are designed to be set within the tank (2) in such a way that said protrusions (38) are attached to the longitudinal walls (24) and to the bottom (29) of said tank (2). The protrusions (38) create a gap (7) smaller than 2.5 millimeters between the bottoms (39) of said cooling flasks (3) to the bottom (29) of said tank (2) and between the lateral walls (33) of said cooling flasks (3) to the longitudinal walls (24) of said tank (2). The gaps (7) constitute a space that serves as part of said single cooling space (6).

According to an example which is not part of the invention, each of the longitudinal walls (24) and the bottom (29) of the tank (2) has at least one protrusion (38) smaller than 2.5 millimeters. The cooling flasks (3) are designed to be set within the tank (2) in such a way that said protrusions (38) are attached to the lateral walls (33) and the bottoms (39) of said cooling flasks (3). The protrusions (38) create a gap (7) smaller than 2.5 millimeters between the bottoms (39) of said cooling flasks (3) to the bottom (29) of said tank (2) and between the lateral walls (33) of said cooling flasks (3) to the longitudinal walls (24) of said tank (2). The gaps (7) constitute a space that serves as part of said single cooling space (6).

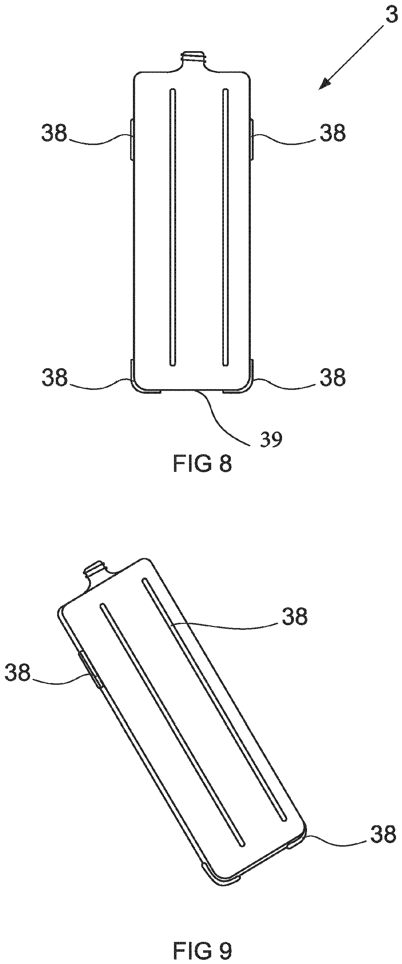

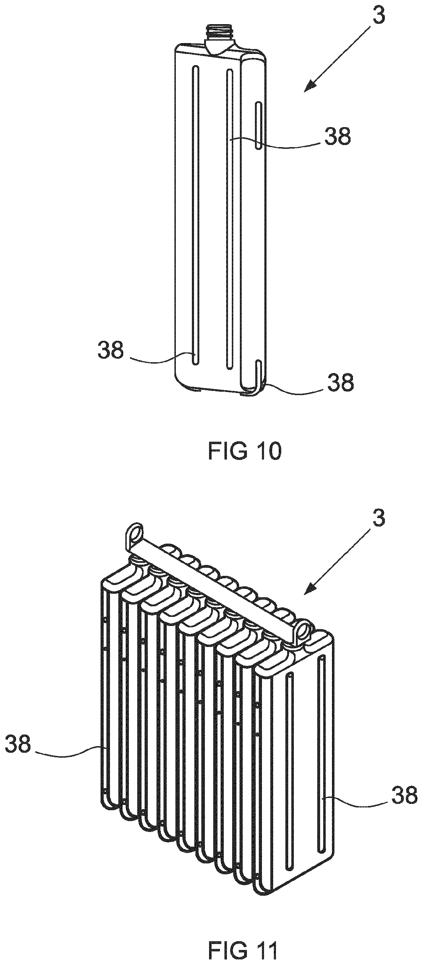

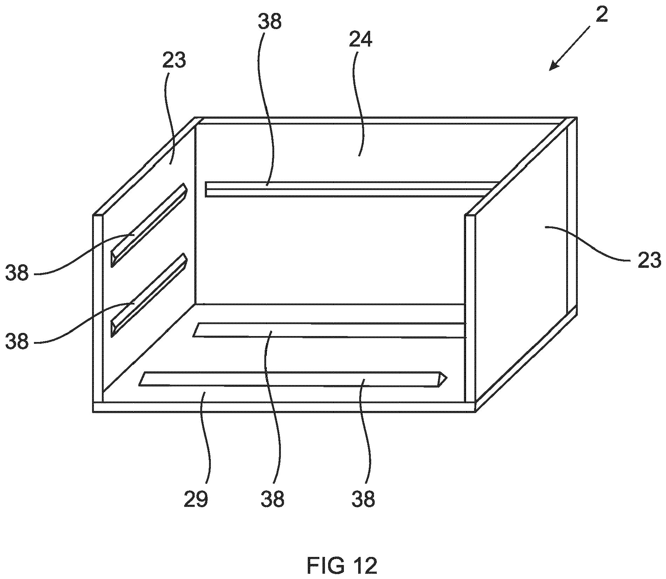

Figures 8-10 depict the cooling flask (3) with protrusions (38) on its bottom (39), on its lateral walls (33) and on its longitudinal walls (32), and Figure 11 depicts several cooling flasks (3) with protrusions (38). Figure 12 is a schematic cross sectional vies of the tank (2) with protrusions (38) on its bottom (29), on its lateral walls (23) and on its longitudinal walls (24).

For the sake of fluency we use in the claims substitute terms as follows:
The terms "two longitudinal walls (24)" and "two lateral walls (23)" of the tank (2) are stated in the claims as "the circumferential wall (24) (23)" of the tank;
The term "two longitudinal walls (32)" of the flasks are stated in the claims as "a first wall section that faces a first wall section of adjacent cooling flask";
The term "two lateral walls (33)" of the flasks are stated in the claims as "a second wall section that faces the circumferential wall of the tank".

## Claims

1. An apparatus (1) for cooling liquids, comprising: a tank (2) and cooling flasks (3);
wherein said tank (2) has a circumferential wall (23, 24) comprising two longitudinal walls (24) and two lateral walls (23), said tank (2) further comprising a bottom (29) and a top opening (21); wherein each of said cooling flasks (3) has a first wall section (32) that faces a first wall section (32) of an adjacent cooling flask, a second wall section (33) that faces the circumferential wall (23, 24) of the tank (2), and a bottom (39); wherein said cooling flasks (3) are designed to contain coolant material;
wherein the first wall section (32), the second wall section (33) and the bottom (39) of each of said cooling flasks (3) each have at least one protrusion (38) smaller than 2.5 millimeters;
wherein the cooling flasks (3) are designed to be set within the tank (2) in such a way that said protrusions (38) create gaps (7) smaller than 2.5 millimeters between each two adjacent cooling flasks (3), between said bottoms (39) of said cooling flasks (3) and said bottom (29) of said tank (2) and between said second wall sections (33) of said cooling flasks (3) and said longitudinal walls (24) of said tank (2), wherein said gaps (7) constitute a single cooling space (6);
wherein a total volume of the cooling flasks (3) is three times greater or more than a total volume of the single cooling space (6); and whereby when a user pours hot water into the single cooling space (6) then the coolant material within said cooling flasks (3) absorbs heat from said hot water.

## Patentansprüche

1. Vorrichtung (1) zum Kühlen von Flüssigkeiten, umfassend: einen Tank (2) und Kühlgefäße (3);
wobei der Tank (2) eine Umfangswand (23, 24) aufweist, die zwei Längswände (24) und zwei Seitenwände (23) umfasst, wobei der Tank (2) ferner einen Boden (29) und eine obere Öffnung (21) umfasst; wobei jedes der Kühlgefäße (3) einen ersten Wandabschnitt (32), der einem ersten Wandabschnitt (32) eines benachbarten Kühlgefäßes zugewandt ist, einen zweiten Wandabschnitt (33), der der Umfangswand (23, 24) des Tanks (2) zugewandt ist, und einen Boden (39) aufweist; wobei die Kühlgefäße (3) dazu ausgelegt sind, Kühlmaterial zu enthalten;
wobei der erste Wandabschnitt (32), der zweite Wandabschnitt (33) und der Boden (39) jedes der Kühlgefäße (3) jeweils mindestens einen Vorsprung (38) aufweisen, der kleiner als 2,5 Millimeter ist;
wobei die Kühlgefäße (3) dazu ausgelegt sind, derart in den Tank (2) eingesetzt zu werden, dass die Vorsprünge (38) zwischen jeweils zwei benachbarten Kühlgefäßen (3), zwischen den Böden (39) der Kühlgefäße (3) und dem Boden (29) des Tanks (2) und zwischen den zweiten Wandabschnitten (33) der Kühlgefäße (3) und den Längswänden (24) des Tanks (2) Lücken (7) erzeugen, die kleiner als 2,5 Millimeter sind, wobei die Lücken (7) einen einzigen Kühlraum (6) bilden;
wobei ein Gesamtvolumen der Kühlgefäße (3) drei Mal größer oder größer als ein Gesamtvolumen des einzelnen Kühlraums (6) ist; und wobei, wenn ein Benutzer heißes Wasser in den einzigen Kühlraum (6) gießt, das Kühlmaterial in den Kühlgefäßen (3) Wärme aus dem heißen Wasser absorbiert.

## Revendications

1. Appareil (1) pour refroidir des liquides comprenant : un réservoir (2) et des flasques de refroidissement (3) ;
dans lequel ledit réservoir (2) a une paroi circonférentielle (23, 24) comprenant deux parois longitudinales (24) et deux parois latérales (23), ledit réservoir (2) comprenant en outre un fond (29) et une ouverture supérieure (21) ; dans lequel chacune desdites flasques de refroidissement (3) a une première section de paroi (32) qui fait face à une première section de paroi (32) d'une flasque de refroidissement adjacente, une seconde section de paroi (33) qui fait face à la paroi circonférentielle (23, 24) du réservoir (2), et un fond (39) ; dans lequel lesdites flasques de refroidissement (3) sont conçues pour contenir un matériau réfrigérant ;
dans lequel la première section de paroi (32), la seconde section de paroi (33) et le fond (39) de chacune desdites flasques de refroidissement (3) ont chacun au moins une saillie (38) inférieure à 2,5 millimètres ;
dans lequel les flasques de refroidissement (3) sont conçues pour être placées à l'intérieur du réservoir (2) de sorte que lesdites saillies (38) créent des interstices (7) inférieurs à 2,5 millimètres entre deux flasques de refroidissement (3) adjacentes, entre lesdits fonds (39) desdites flasques de refroidissement (3) et ledit fond (29) dudit réservoir (2) et entre lesdites secondes sections de paroi (33) desdites flasques de refroidissement (3) et lesdites parois longitudinales (24) dudit réservoir (2), dans lequel lesdits interstices (7) constituent un seul espace de refroidissement (6) ;
dans lequel un volume total des flasques de refroidissement (3) est trois fois supérieur ou plus à un volume total de l'espace de refroidissement (6) unique ; et moyennant quoi lorsqu'un utilisateur verse de l'eau chaude dans l'espace de refroidissement (6) unique, alors le matériau réfrigérant à l'intérieur desdites flasques de refroidissement (3) absorbe la chaleur de ladite eau chaude.
